# FASCICULE DE BREVET EUROPEEN

(11) **EP 2 721 271 B1**
(45) Date de publication et mention de la délivrance du brevet: **01.03.2017**
(21) Numéro de dépôt: 12732690.8
(22) Date de dépôt: 07.06.2012
(51) Int. Cl.: F02C 3/107

(54) **ARCHITECTURE DOUBLE CORPS DE TURBOMOTEUR AVEC COMPRESSEUR HAUTE PRESSION LIE A LA TURBINE BASSE PRESSION.**
ZWEIKOLBEN-TURBINENMOTORDESIGN MIT AN DIE NIEDERDRUCKTURBINE ANGESCHLOSSENEM HOCHDRUCKVERDICHTER
TWO SPOOL ARRANGEMENT FOR A TURBOMOTOR WITH HIGH PRESSURE COMPRESSOR DRIVING THE LOW PRESSURE TURBINE

(30) Priorité: 16.06.2011 FR 1155262
(43) Date de publication de la demande: 23.04.2014
(73) Titulaire: Safran Helicopter Engines, 64510 Bordes (FR)
(72) Inventeur: PRINCIVALLE, Rémy, F-34170 Castelnau le Lez (FR)
(74) Mandataire: Milien, Jean-Baptiste Aurélien
(86) Numéro de dépôt international: PCT/FR2012/051273
(87) Numéro de publication internationale: WO 2012/172235

(56) Documents cités:
- CH-A- 277 880
- US-A- 4 858 428

## Description

### DOMAINE DE L'INVENTION

L'invention concerne la structure interne d'un turbomoteur et plus particulièrement la structure interne d'un turbomoteur d'hélicoptère.

On notera que le terme « turboréacteur » désigne un appareil à turbine à gaz fournissant par réaction à l'éjection à grande vitesse de gaz chauds, une poussée nécessaire à la propulsion tandis que le terme « turbomoteur » désigne un appareil à turbine à gaz entrainant un arbre moteur en rotation. Par exemple, des turbomoteurs sont utilisés comme moteur pour des hélicoptères, des navires, des trains, ou encore comme moteur industriel. Les turbopropulseurs (turbomoteur entrainant une hélice) sont également des turbomoteurs utilisés comme moteur d'avion.

### ETAT DE LA TECHNIQUE ANTERIEURE

Un turbomoteur classique comprend généralement un compresseur basse pression et un compresseur haute pression disposé en aval, dans le sens de l'écoulement des gaz au sein du turbomoteur, du compresseur basse pression. Dans certaines conditions d'utilisation, un phénomène de pompage apparait lorsque la pression à l'entrée du compresseur haute pression est supérieure à la pression en sortie du compresseur basse pression. Le fonctionnement du turbomoteur devient instable, et peut conduire jusqu'à un refoulement des gaz par l'entrée du compresseur basse pression.

Une structure classique de turboréacteur du type double corps, comprenant un corps basse pression (compresseur basse pression couplé par un arbre à une turbine basse pression) et un corps haute pression (compresseur haute pression couplé par un autre arbre à une turbine haute pression, le compresseur haute pression et la turbine haute pression étant encadrés d'une part par le compresseur basse pression et d'autre part par la turbine basse pression), permet d'éviter ce phénomène de pompage. Cependant, une telle structure de turboréacteur est difficilement adaptable aux turbomoteurs car en fonctionnement normal, le taux de compression d'un turboréacteur double corps est trop élevé par rapport au taux de compression imposé à un turbomoteur en fonctionnement normal. En effet, le taux de compression d'un turboréacteur double corps est généralement de l'ordre de 30 à 40 (par exemple dans un turboréacteur d'avion) tandis que le taux de compression d'un turbomoteur est généralement inférieur à 20 (par exemple dans un turbomoteur d'hélicoptère).

US 4 858 428 divulgue un turbomoteur tel que défini par le préambule de la revendication 1.

### PRESENTATION DE L'INVENTION

Un but de l'invention est de proposer un turbomoteur dans lequel le risque d'occurrence d'un phénomène de pompage entre le compresseur basse pression et la compresseur haute pression est réduit voire nul.

L'invention atteint son but en proposant un turbomoteur tel que défini par la revendication 1. Un tel turbomoteur comprend un compresseur basse pression, un compresseur haute pression, une turbine basse pression, une turbine haute pression, et des moyens de régulation pour réguler la vitesse de rotation de la turbine basse pression à une vitesse sensiblement constante, dans lequel la turbine basse pression est couplée par un premier arbre au compresseur haute pression tandis que la turbine haute pression est couplée par un second arbre au compresseur basse pression.

On comprend que le compresseur haute pression est disposé en aval du compresseur basse pression, que la turbine haute pression est disposée en aval du compresseur haute pression et que la turbine basse pression est disposée en aval de la turbine haute pression. La turbine haute pression est la première turbine en aval d'une chambre de combustion. La chambre de combustion est disposée, dans le sens de l'écoulement des gaz, entre le compresseur haute pression et la turbine haute pression. On comprend également que la turbine haute pression est soumise à des variations de vitesse de rotation selon qu'on injecte plus au moins de carburant dans la chambre de combustion.

De manière générale et sauf indication contraire, l'amont et l'aval ainsi que l'entrée et la sortie d'un élément sont définis relativement au sens de l'écoulement des gaz au sein du turbomoteur.

Le compresseur haute pression est monté sur le même arbre tournant que la turbine basse pression tandis que le compresseur basse pression est monté sur le même arbre tournant que la turbine haute pression. Ainsi, le compresseur haute pression et la turbine basse pression tournent à une même vitesse de rotation tandis que le compresseur basse pression et la turbine haute pression tournent à une même autre vitesse de rotation.

Le terme « vitesse sensiblement constante » signifie que pour une vitesse de fonctionnement prédéterminée, la vitesse est susceptible de varier au maximum de plus ou moins quinze pour cent (±15%). Par exemple, pour réguler la vitesse de la turbine basse pression, les moyens de régulation injectent plus ou moins de carburant dans la chambre de combustion, grâce à quoi l'ensemble tournant comprenant la turbine haute pression et le compresseur basse pression est accéléré ou ralenti. Par conséquent, le débit de gaz est plus ou moins important et permet de fournir l'énergie nécessaire à la turbine basse pression pour tourner à vitesse sensiblement constante quel que soit le couple appliqué sur l'arbre moteur du turbomoteur.

Grâce aux moyens de régulation, le compresseur haute pression étant couplé mécaniquement par le premier arbre à la turbine basse pression, la vitesse du compresseur haute pression est sensiblement constante. D'autre part, le compresseur basse pression étant mécaniquement couplé à la turbine haute pression par le second arbre, les variations de vitesse de rotation de la turbine haute pression, n'affectent que la vitesse de rotation du compresseur basse pression. Ainsi, la vitesse de rotation du compresseur haute pression est sensiblement constante par rapport à la vitesse de rotation du compresseur basse pression. Par conséquent, on réduit, voire on évite, les risques de pompages entre les compresseurs basse et haute pression. Bien entendu, on comprend que pour une vitesse de rotation prédéterminée du compresseur haute pression, la vitesse de rotation du compresseur basse pression est comprise dans une plage de vitesses de rotation prédéterminée telle que le compresseur haute pression est toujours apte à recevoir et comprimer les gaz issus du compresseur basse pression.

En d'autres termes, en couplant mécaniquement le compresseur haute pression à la turbine basse pression et le compresseur basse pression à la turbine haute pression, et grâce aux moyens de régulation, la vitesse de rotation du compresseur haute pression est plus stable que la vitesse de rotation du compresseur basse pression, de sorte que le risque de surpression entre le compresseur basse pression et le compresseur haute pression est réduit voire nul, les phénomènes de pompage étant ainsi réduits voire inexistants.

Le premier arbre traverse coaxialement le second arbre, le premier et le second arbre définissant une direction axiale, le compresseur haute pression, le compresseur basse pression, la turbine haute pression et la turbine basse pression étant disposés dans cet ordre le long de la direction axiale. Cette disposition correspond à une première variante.

Comparativement aux turboréacteurs double corps classiques, les positions des compresseurs haute et basse pression selon la direction axiale sont inversées tandis que les turbines haute et basse pression sont disposées dans le même ordre. Dans cette première variante, le premier arbre est central, ce qui facilite le raccordement à cet arbre pour la transmission des efforts moteurs (cf. prise de force), notamment à l'avant du turbomoteur (i.e. du côté opposé aux turbines par rapport aux compresseurs selon la direction axiale).

Selon une deuxième variante qui n'est pas revendiquée, le second arbre traverse coaxialement le premier arbre, le premier et le second arbre définissant une direction axiale, le compresseur basse pression, le compresseur haute pression, la turbine basse pression et la turbine haute pression étant disposés dans cet ordre le long de la direction axiale.

Comparativement aux turboréacteurs double corps classiques, les positions des turbines haute et basse pression selon la direction axiale sont inversées tandis que les compresseurs haute et basse pression sont disposés dans le même ordre. Dans cette deuxième variante, la chambre de combustion est avantageusement disposée à l'arrière du turbomoteur (i.e. du côté opposé aux compresseurs par rapport aux turbines). L'accès à la chambre de combustion est ainsi facilité pour sa maintenance ou son remplacement.

Avantageusement, le turbomoteur selon la deuxième variante comprend un canal d'éjection de gaz disposé en aval de la turbine basse pression, et un conduit de gaz reliant la sortie du compresseur haute pression à une chambre de combustion disposée en amont de la turbine haute pression, le conduit de gaz traversant le canal d'éjection de gaz en passant par un échangeur de chaleur afin de transférer de la chaleur des gaz issus de la turbine basse pression aux gaz s'écoulant dans le conduit de gaz.

L'échangeur de chaleur permet un contact thermique entre le conduit de gaz et le canal d'éjection de gaz. L'échangeur de chaleur permet de chauffer les gaz issus du compresseur haute pression avant de les faire pénétrer dans la chambre de combustion, ce qui permet de réduire les pertes thermiques et d'augmenter le rendement du turbomoteur.

Préférentiellement, le turbomoteur selon l'invention est un turbomoteur d'hélicoptère.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :
- la figure 1 représente schématiquement un premier mode de réalisation du turbomoteur selon l'invention, et
- la figure 2 représente schématiquement un deuxième mode de réalisation du turbomoteur qui n'est pas revendiqué.

### DESCRIPTION DETAILLEE D'EXEMPLES DE REALISATION

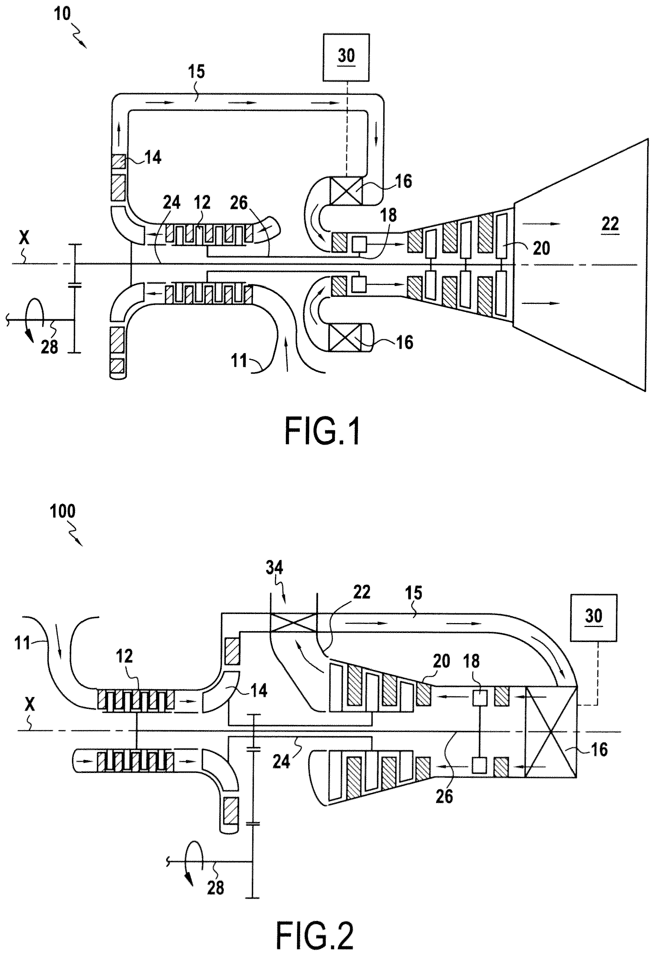

La figure 1 représente un premier mode de réalisation du turbomoteur selon l'invention correspondant à la première variante décrite ci-avant. Les flèches représentent le sens de l'écoulement des gaz au sein du turbomoteur 10. De l'air entre dans le turbomoteur 10 par un canal d'entrée d'air 11 et des gaz de combustion sont éjectés par un canal d'éjection de gaz 22. Le turbomoteur 10 est un turbomoteur d'hélicoptère.

Dans le sens de l'écoulement des gaz, le turbomoteur 10 comprend successivement un compresseur basse pression 12, un compresseur haute pression 14, une chambre de combustion 16, une turbine haute pression 18, et une turbine basse pression 20. Dans cet exemple le compresseur haute pression 14 est un compresseur centrifuge tandis que le compresseur basse pression 12 est un compresseur axial. Bien entendu, selon une variante, le compresseur haute pression peut être axial et/ou le compresseur basse pression peut être centrifuge. Un conduit de gaz 15 relie la sortie du compresseur haute pression 14 à l'entrée de la chambre de combustion 16 afin d'amener l'air comprimé issu du compresseur haute pression 14 vers la chambre de combustion 16. On notera que sur les figures 1 et 2, les éléments fixes des compresseurs 12 et 14 et des turbines 18 et 20 sont hachurés tandis que les éléments mobiles ne sont pas hachurés.

Le compresseur haute pression 14 est couplé en rotation avec la turbine basse pression 20 par un premier arbre 24. Le compresseur basse pression 12 est couplé en rotation avec la turbine haute pression 18 par un second arbre 26. Le premier arbre 24 traverse coaxialement le second arbre 26, les premier et second arbres 24 et 26 définissant une direction axiale X (ou axe X). Dans ce premier mode de réalisation, de gauche à droite sur la figure 1, le compresseur haute pression 14, le compresseur basse pression 12, la turbine haute pression 18 et la turbine basse pression 20 sont disposés dans cet ordre le long de la direction axiale X.

Le premier arbre 24 lié à la turbine basse pression 20 est l'arbre moteur du turbomoteur 10. Ce premier arbre 24 est en prise avec un arbre de transmission 28 entrainant le rotor d'un hélicoptère (non représenté) par exemple via un jeu d'engrenages comme représenté sur la figure 1 ou directement (non représenté). Selon une variante, un embrayage est disposé entre le premier arbre 24 et l'arbre de transmission 28 pour le démarrage. Dans cet exemple, le raccordement du premier arbre 24 avec l'arbre de transmission 28 est réalisé à l'avant du turbomoteur 10, c'est-à-dire à gauche sur la figure 1.

Des moyens de régulation 30 régulent l'injection de carburant dans la chambre de combustion 16 afin que la turbine basse pression 20, et donc le rotor de l'hélicoptère, tournent à vitesse sensiblement constante, quel que soit le couple résistif appliqué par le rotor d'hélicoptère sur le premier arbre 24. Ainsi, quelle que soit l'inclinaison des pales du rotor d'hélicoptère pour les différentes régimes de vol de l'hélicoptère, et donc quel que soit le couple résistif appliqué par le rotor d'hélicoptère sur le premier arbre 24, ledit rotor tourne à vitesse constante.

Grâce aux moyens de régulation 30 et au couplage de la turbine basse pression 20 avec le compresseur haute pression 14 via le premier arbre 24, le compresseur haute pression 14 tourne à vitesse constante. La turbine haute pression 18 étant couplée au compresseur basse pression 12, les variations de vitesse de rotation de la turbine haute pression 18, dues à la régulation de l'injection de carburant dans la chambre de combustion 16, impactent le compresseur basse pression 12. Ainsi, étant entendu que le compresseur haute pression 14 fonctionne normalement, c'est-à-dire est apte à comprimer les gaz issus du compresseur basse pression 12, sur toute la plage de variation de la vitesse de rotation du compresseur basse pression 12 en régime normal ou en régime intermédiaire (i.e. régime partiel ou demi-puissance), on évite les phénomènes de pompage entre les compresseurs basse et haute pression 12 et 14.

La figure 2 représente un deuxième mode de réalisation du turbomoteur correspondant à la deuxième variante décrite ci-avant, ce deuxième mode de réalisation n'étant pas revendiqué. Les flèches représentent le sens de l'écoulement des gaz au sein du turbomoteur 100. Les éléments communs avec le premier mode de réalisation ne sont pas décrits à nouveau et conservent leurs références numériques inchangées, leur fonctionnement n'étant également pas décrit à nouveau. De la même manière que pour le premier mode de réalisation, le compresseur basse pression 12 est un compresseur axial mais peut être remplacé, selon une variante, par un compresseur centrifuge. De même, le compresseur haute pression 14 est un compresseur centrifuge mais peut être remplacé, selon une variante, par un compresseur axial.

Dans le turbomoteur 100, le second arbre 26 traverse coaxialement le premier arbre 24, les premier et second arbres 24 et 26 définissant la direction axiale X (ou axe X). Dans ce deuxième mode de réalisation, de gauche à droite sur la figure 2, le compresseur basse pression 12, le compresseur haute pression 14, la turbine basse pression 20 et la turbine haute pression 18 sont disposés dans cet ordre le long de la direction axiale X. Dans cet exemple, la chambre de combustion 16 est disposée à l'arrière du turbomoteur 100, c'est-à-dire à droite sur la figure 2.

Le conduit de gaz 15 traverse le canal d'éjection 22 en passant par un échangeur de chaleur 34. Bien entendu, l'échangeur de chaleur 34 n'obture pas le canal d'éjection 22 et les gaz s'échappent librement vers l'extérieur en enveloppant au moins partiellement l'échangeur de chaleur 34. Ainsi, les gaz éjectés du turbomoteur 100 sont directement en contact thermique avec l'échangeur de chaleur 34 et transmettent de la chaleur aux gaz s'écoulant dans le conduit 15 via l'échangeur de chaleur 34. Selon une variante, le conduit de gaz 15 ne traverse pas le canal d'éjection 22 et aucun transfert de chaleur n'est réalisé.

On notera que le canal d'entrée d'air 11 et le conduit de gaz 15 du premier et du deuxième mode de réalisation, et le canal d'éjection 22 du deuxième mode de réalisation ne sont pas à symétrie de révolution, ce qui permet notamment de loger le canal d'entrée d'air 11 et le conduit de gaz 15 dans le premier mode de réalisation et la transmission mécanique entre les arbres 24 et 28 dans le deuxième mode de réalisation. Selon des variantes, le canal d'entrée d'air 11, le conduit de gaz 15 et/ou le canal d'éjection 22 peuvent présenter des géométries différentes, à symétrie de révolution ou pas.

## Revendications

1. Turbomoteur (10, 100) comprenant un compresseur basse pression (12), un compresseur haute pression (14), une turbine basse pression (20), une turbine haute pression (18), et des moyens de régulation (30) pour réguler la vitesse de rotation de la turbine basse pression (20) à une vitesse sensiblement constante, dans lequel la turbine basse pression (20) est couplée par un premier arbre (24) au compresseur haute pression (14) tandis que la turbine haute pression (18) est couplée par un second arbre (26) au compresseur basse pression (12), le premier arbre (24) traversant coaxialement le second arbre (26) et le premier et le second arbre (24, 26) définissant une direction axiale (X), **caractérisé en ce que** le compresseur haute pression (14), le compresseur basse pression (12), la turbine haute pression (18) et la turbine basse pression (20) sont disposés dans cet ordre le long de la direction axiale (X).

2. Turbomoteur (10) selon la revendication 1 formant un turbomoteur d'hélicoptère.

## Patentansprüche

1. Turbomotor (10, 100), umfassend einen Niederdruckverdichter (12), einen Hochdruckverdichter (14), eine Niederdruckturbine (20), eine Hochdruckturbine (18) und Regelmittel (30) zur Regelung der Drehzahl der Niederdruckturbine (20) auf eine im Wesentlichen konstante Geschwindigkeit, wobei die Niederdruckturbine (20) durch eine erste Welle (24) mit dem Hochdruckverdichter (14) gekoppelt ist, während die Hochdruckturbine (18) durch eine zweite Welle (26) mit dem Niederdruckverdichter (12) gekoppelt ist, wobei die erste Welle (24) die zweite Welle (26) koaxial durchgreift und wobei die erste und die zweite Welle (24, 26) eine axiale Richtung (X) definieren, **dadurch gekennzeichnet, dass** der Hochdruckverdichter (14), der Niederdruckverdichter (12), die Hochdruckturbine (18) und die Niederdruckturbine (20) in dieser Reihenfolge entlang der axialen Richtung (X) angeordnet sind.

2. Turbomotor (10) nach Anspruch 1, der einen Hubschrauber-Turbomotor bildet.

## Claims

1. A turboshaft engine (10, 100) comprising a low-pressure compressor (12), a high-pressure compressor (14), a low-pressure turbine (20), a high-pressure turbine (18), and regulator means (30) for regulating the speed of rotation of the low-pressure turbine (20) to a speed that is substantially constant, wherein the low-pressure turbine (20) is coupled by a first shaft (24) to the high-pressure compressor (14), while the high-pressure turbine (18) is coupled by a second shaft (26) to the low-pressure compressor (12), the first shaft (24) passes coaxially inside the second shaft (26), the first and second shafts (24, 26) defining an axial direction (X), **characterized in that** the high-pressure compressor (14), the low-pressure compressor (12), the high-pressure turbine (18), and the low-pressure turbine (20) are arranged **in that** order along the axial direction (X).

2. A turboshaft engine (10) according to claim 1, forming a turboshaft engine for helicopter.
